# EUROPEAN PATENT SPECIFICATION

(11) **EP 4 129 815 B1**
(45) Date of publication and mention of the grant of the patent: **06.05.2026**
(21) Application number: 21778914.8
(22) Date of filing: 30.03.2021
(51) Int. Cl.: B63B 25/16, F17C 13/00

(54) **SHIP**
SCHIFF
NAVIRE

(30) Priority: 01.04.2020 JP 2020065714
(43) Date of publication of application: 08.02.2023
(73) Proprietor: KAWASAKI JUKOGYO KABUSHIKI KAISHA, Kobe-shi, Hyogo 650-8670 (JP)
(72) Inventor: TANIMOTO, Keisuke, Hyogo 650-86070 (JP); GOKAN, Kazuto, Hyogo 650-8670 (JP); OHASHI, Tetsuya, Hyogo 650-8670 (JP); SUZUKI, Tomomi, Hyogo 650-8670 (JP)
(74) Representative: Arnold & Siedsma
(86) International application number: PCT/JP2021/013567
(87) International publication number: WO 2021/200962

(56) References cited:
- WO-A1-2019/096861
- CN-U- 205 065 288
- JP-A- 2015 004 383
- JP-A- 2016 185 780
- JP-A- 2018 204 721
- JP-B2- 6 212 553
- JP-U- H0 627 495
- KR-B1- 101 637 415
- "Guidelines for Liquefied Gas Carrier", NIPPON KAIJI KYOKAI, vol. 12, no. 14, March 2017 (2017-03-01), pages 1 - 41
- NISHIFUJI, KOICHI: "Rules and Safety Measures for Liquefied Hydrogen Carriers", JOURNAL OF THE JAPAN INSTITUTE OF MARINE ENGINEERING, vol. 54, no. 5, 1 September 2019 (2019-09-01), pages 709 - 712, XP055975717, DOI: 10.5988/jime.54.709 712
- HAYAKAWA, SABURO: "Safety course: Safety with cryogenic fluids", OYO BUTURI, vol. 62, no. 2, 10 February 1993 (1993-02-10), pages 174 - 175, XP009540317, ISSN: 2188-2290, DOI: 10.11470/oubutsu1932.62.174
- MURAGISHI, OSAMU,INATSU, SHOHEI, URAGUCHI, RYOSUKE, YAMASHIRO, KAZUTO, IMAI, TATSUYA, OHASHI, TETSUYA, SHIMOGAKI, TAKASHI, YOSHIDA: "Technical description: Hydrogen Transportation - Development of Liquefied Hydrogen Carrier", TECHNICAL REVIEW, vol. 182, 31 August 2020 (2020-08-31), pages 24 - 27, XP009540316, ISSN: 0387-7906

## Description

### Technical Field

The present disclosure relates to a ship on which a double-shell tank as a cargo tank is mounted.

### Background Art

A ship on which a double-shell tank as a cargo tank is mounted has been known. The double-shell tank includes an inner tank and an outer tank. The inner tank stores a low temperature fluid cargo, such as a liquefied gas. The outer tank covers the inner tank. To improve a heat insulating property, a vacuum space is formed in an inter-tank region between the inner and outer tanks of the double-shell tank, or a heat insulating material is filled in the inter-tank region at normal pressure. PTL 1 discloses a liquefied gas carrier that is one example of the ship on which the double-shell tank as the cargo tank is mounted.

The liquefied gas carrier disclosed in PTL 1 includes a cargo tank and a tank cover that wraps the cargo tank. An inactive gas is filled in a space between the cargo tank and the tank cover. The cargo tank includes: an inner tank that stores a liquefied gas; and an outer tank that secures a vacuum space between the inner tank and the outer tank.

Generally, the liquefied gas carrier includes a depressurizer that maintains internal pressure of the cargo tank at a value lower than design withstand pressure by suitably discharging a boil off gas, generated inside the cargo tank during sailing, to an outside of the cargo tank. The depressurizer generally includes: a discharge pipe connected to an upper portion of the cargo tank; and a pressure relief valve (safety valve) that releases the boil off gas from the cargo tank to the discharge pipe when the internal pressure of the cargo tank becomes excessive. The boil off gas discharged through the discharge pipe to the outside of the cargo tank is discharged from a high place through a bent mast, is utilized as fuel, or is liquefied again and returned to an inside of the cargo tank. For example, PTL 2 discloses a technology in which the boil off gas generated in the cargo tank that stores liquid hydrogen is discharged through a discharge tower from a high place higher than a top portion of the cargo tank. PTL 3 discloses a method and system for controlling the pressure of a liquid storage tank installed in an offshore structure, wherein the method includes keeping the inner pressure of the inner space of the tank and the inner pressure of the primary insulation space equal by communicating between the primary insulation spaces.

### Citation List

### Patent Literature

PTL 1: International Publication No. 2014/203530
PTL 2: Japanese Laid-Open Patent Application Publication No. 2018-204721
PTL 3: Korean Patent Publication No. 10-1637415

### Summary of Invention

### Technical Problem

If the inner tank of the double-shell tank that stores the liquefied gas cracks due to some reason, the liquefied gas in the inner tank leaks to the inter-tank region between the inner tank and the outer tank. The liquefied gas that has leaked to the inter-tank region evaporates, and this increases the pressure of the inter-tank region. For such emergency, the ship on which the double-shell tank is mounted may include, in addition to the depressurizer for the inner tank, another depressurizer for the inter-tank region between the inner tank and the outer tank. Therefore, the present application proposes a ship on which a double-shell tank is mounted and which includes a depressurizer for an inter-tank region between an inner tank and an outer tank.

### Solution to Problem

A ship according to one aspect of the present disclosure includes: a hull; at least one double-shell tank mounted on the hull and including an inner tank and an outer tank, the inner tank storing a liquefied gas, the outer tank covering the inner tank; at least one first discharge tower extending upward from the hull; at least one second discharge tower extending upward from the hull and independent from the first discharge tower; a first discharge line connecting an upper portion of the inner tank and an inside of the first discharge tower; a second discharge line connecting an inter-tank region between the inner tank and the outer tank and an inside of the second discharge tower and independent from the first discharge line; and a pressure relief structure that is at the second discharge line, is normally closed, and is open when pressure of the inter-tank region exceeds a predetermined inter-tank allowable value.

According to the ship configured as above, when the pressure of the inter-tank region increases since the liquefied gas enters into and evaporates in the inter-tank region between the inner tank and the outer tank, the evaporated liquefied gas is discharged from the inter-tank region through the second discharge line, and with this, the inter-tank region is depressurized. Therefore, damages of the inner tank and the outer tank by excessive pressure can be prevented.

Furthermore, according to the ship configured as above, a discharge route of a boil off gas generated from the liquefied gas stored in the inner tank and a discharge route of the liquefied gas that has leaked to the inter-tank region and evaporated are independent from each other. To be specific, the discharge route of the boil off gas of the inner tank is realized by the first discharge line and the first discharge tower, and the discharge route of the liquefied gas that has leaked to the inter-tank region and evaporated is realized by the second discharge line and the second discharge tower. Therefore, the evaporated liquefied gas and outside air can be prevented from flowing backward into the discharge route of the boil off gas of the inner tank when depressurizing the inter-tank region.

### Advantageous Effects of Invention

The present disclosure can propose a ship on which a double-shell tank is mounted and which includes a depressurizer for an inter-tank region between an inner tank and an outer tank.

### Brief Description of Drawings

FIG. 1 is a side view showing an entire configuration of a ship according to one embodiment of the present disclosure.
FIG. 2 is a sectional view for explaining the structure of a double-shell tank mounted on the ship.

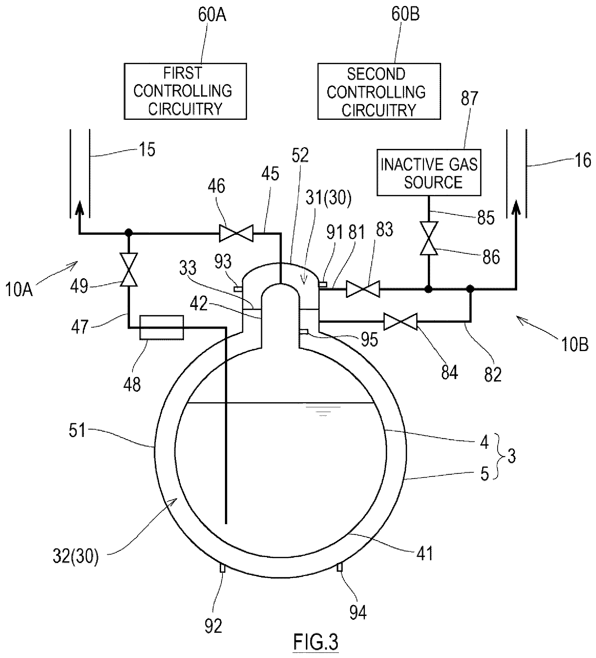

FIG. 3 is a diagram for explaining a depressurizer included in the ship.

### Description of Embodiments

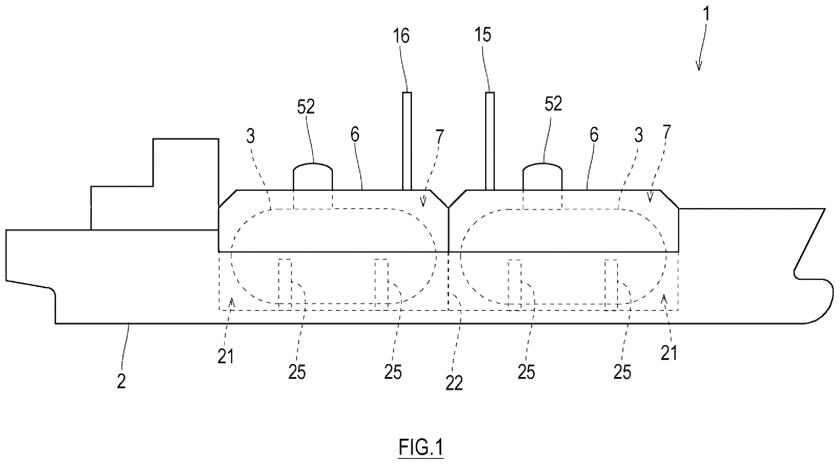

FIG. 1 shows a ship 1 according to one embodiment of the present disclosure. The ship 1 includes: a hull 2; two double-shell tanks 3 mounted on the hull 2; and a first discharge tower 15 and a second discharge tower 16 which extend upward from the hull 2. The double-shell tanks 3 are cargo tanks for transportation of a low temperature fluid. In the present embodiment, the double-shell tanks 3 are lined up in a ship longitudinal direction. However, when the width of the ship is large, the double-shell tanks 3 may be lined up in a ship width direction. The number of double-shell tanks 3 mounted on the hull 2 may be one or may be three or more.

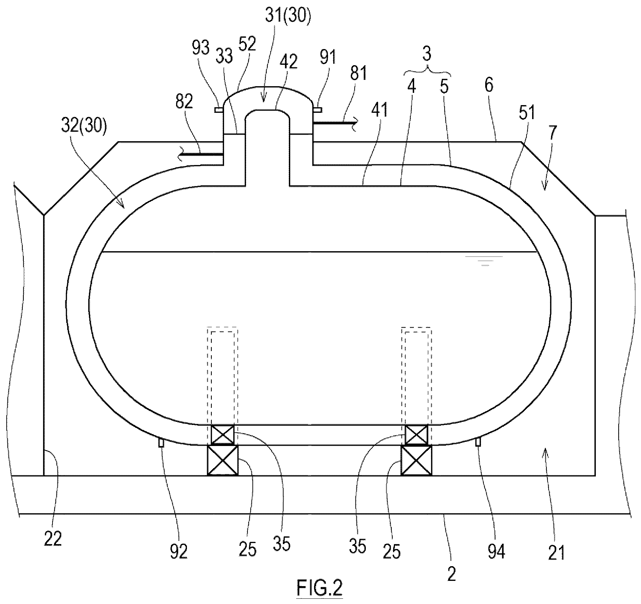

The two double-shell tanks 3 are substantially the same in structure as each other. As shown in FIG. 2, each double-shell tank 3 includes: an inner tank 4 that stores cargoes; and an outer tank 5 that wraps the inner tank 4. The inner tank 4 and the outer tank 5 are spaced apart from each other substantially uniformly. A heat insulating layer that wraps the inner tank 4 is in an inter-tank region 30 between the inner tank 4 and the outer tank 5.

The heat insulating layer in the inter-tank region 30 may be a vacuum heat insulating layer. In this case, for example, an outer surface of the inner tank 4 is covered with a vacuum heat insulating material (for example, a sheet in which radiation shield films and spacers are alternately laminated on each other), and a gap where there is no object is between the vacuum heat insulating material and an inner surface of the outer tank 5. Or, a heat insulating layer may be formed by filling the inter-tank region 30 with a heat insulating material. In this case, for example, pearlite that is a particulate heat insulating material is filled in the inter-tank region 30 between the inner tank 4 and the outer tank 5 under normal pressure or a reduced-pressure atmosphere.

The cargo may be a liquefied gas that is one of a liquefied petroleum gas (LPG; about -45°C), a liquefied ethylene gas (LEG; about -100°C), a liquefied natural gas (LNG; about -160°C), liquefied oxygen (LO₂; about -180°C), liquefied hydrogen (LH₂; about -250°C), and liquefied helium (LHe; about -270°C). However, the cargo does not necessarily have to be a liquid and may be a gas.

The inner tank 4 includes: a cylindrical inner tank main body 41 that is long in a horizontal direction; and an inner tank dome 42 that projects upward from the inner tank main body 41. In the present embodiment, an axial direction of the inner tank main body 41 is parallel to the ship longitudinal direction. An axial direction of the inner tank dome 42 is parallel to a vertical direction in the present embodiment but may be slightly inclined relative to the vertical direction.

The outer tank 5 includes: a cylindrical outer tank main body 51 that is long in the horizontal direction; and an outer tank dome 52 that projects upward from the outer tank main body 51. The outer tank main body 51 surrounds the inner tank main body 41. The outer tank dome 52 surrounds the inner tank dome 42. As with the inner tank main body 41, an axial direction of the outer tank main body 51 is parallel to the ship longitudinal direction. As with the inner tank dome 42, an axial direction of the outer tank dome 52 is parallel to the vertical direction. Each of the inner tank main body 41 and the outer tank main body 51 does not necessarily have to have a cylindrical shape that is long in the horizontal direction and may have a cylindrical shape that is long in the vertical direction. Or, each of the inner tank main body 41 and the outer tank main body 51 may have a spherical shape, a cube shape, or a rectangular solid shape.

The hull 2 includes two cargo holds 21 that are open upward. The cargo holds 21 are lined up in the ship longitudinal direction. The cargo holds 21 are separated from each other by a dividing wall 22. Lower portions of the double-shell tanks 3 are in the respective cargo holds 21.

A pair of saddles 25 that are spaced apart from each other in the ship longitudinal direction are in each cargo hold 21. The saddles 25 support the outer tank main body 51 of the outer tank 5 of the double-shell tank 3. Moreover, a pair of supports 35 that support the inner tank main body 41 are between the inner tank 4 and the outer tank 5 of the double-shell tank 3. In the present embodiment, the support 35 is at the same position as the saddle 25. However, the support 35 may be at a different position from the saddle 25.

Tank covers 6 are located above the respective double-shell tanks 3. Each tank cover 6 covers the corresponding double-shell tank 3 from above. A holding space 7 in which an inactive gas is filled is between the hull 2 and the tank cover 6. The outer tank main body 51 of the outer tank 5 is located under the tank cover 6, and the outer tank dome 52 of the outer tank 5 penetrates the tank cover 6.

As the inactive gas filled in the holding space 7, nitrogen, argon, or the like may be used. The inactive gas prevents the pressure of the holding space 7 from becoming negative pressure and prevents dew condensation on the surface of the double-shell tank 3. Specifically, when the liquefied gas in the inner tank 4 is liquefied hydrogen, the inactive gas filled in the holding space 7 also prevents the generation of liquefied oxygen around the double-shell tank 3. However, a gas (for example, dry air) other than the inactive gas may be filled in the holding space 7. Or, nothing may be filled in the holding space 7, i.e., a gas in the holding space 7 may be ordinary air.

Each of the inner tank dome 42 and the outer tank dome 52 is a portion where various pipes, such as a liquefied gas transfer pipe and an electric pipe, are collected. These pipes (not shown) extend through the inner tank dome 42 and the outer tank dome 52. A partition 33 is between the inner tank dome 42 and the outer tank dome 52. The partition 33 maintains most of the inter-tank region 30 in a vacuum state when the outer tank dome 52 includes an opening for maintenance. The partition 33 divides the inter-tank region 30 into an upper region 31 and a lower region 32. The upper region 31 wraps the inner tank dome 42, and the lower region 32 wraps the entire inner tank main body 41.

In FIG. 2, the partition 33 is between a peripheral wall of the inner tank dome 42 and a peripheral wall of the outer tank dome 52 and has a flat ring shape. However, the position and shape of the partition 33 may be suitably changed. For example, the partition 33 may be between a top portion of the inner tank dome 42 and a top portion of the outer tank dome 52 and have a tubular shape.

An upper vacuum gauge 91 and an upper pressure gauge 93 are at the upper region 31. The upper vacuum gauge 91 detects degree of vacuum of the upper region 31. The upper pressure gauge 93 detects pressure of the upper region 31. A lower vacuum gauge 92 and a lower pressure gauge 94 are at the lower region 32. The lower vacuum gauge 92 detects degree of vacuum of the lower region 32. The lower pressure gauge 94 detects pressure of the lower region 32. As above, the vacuum gauge and the pressure gauge are located at each of the upper region 31 and the lower region 32, and therefore, not only the vacuum state but also the pressure of the upper region 31 and the pressure of the lower region 32 in a wide range can be detected.

### First Depressurizer 10A

The ship 1 according to the present embodiment includes a first depressurizer 10A that depressurizes an inside of the inner tank 4. In case of emergency in which pressure (hereinafter referred to as an "inner tank internal pressure") in the inner tank 4 exceeds preset first allowable pressure, the first depressurizer 10A discharges a boil off gas, staying at an upper portion of the inner tank 4, through the first discharge tower 15 to the atmosphere.

The first discharge tower 15 according to the present embodiment has a substantially I shape extending in the vertical direction, and a discharge port that is open upward to the atmosphere is at an upper end portion of the first discharge tower 15. Since the boil off gas of the liquefied gas is an inflammable gas, an installation location of the discharge port of the first discharge tower 15 through which the boil off gas is discharged is defined as "a location which is horizontally away from a residential area, an engine area, and an opening connected to an ignition source by ten meters or more and is at a height of six meters or more in an upper direction from a sidewalk existing within four meters from the discharge port," and the discharge port of the first discharge tower 15 is located at a place that is isolated from the ignition source of the ship and crews of the ship.

The first depressurizer 10A includes: a first discharge line 45 connecting the upper portion of the inner tank 4 and the first discharge tower 15; a first pressure relief valve (inner tank pressure relief valve) 46 at the first discharge line 45; a heating line 47 connecting a lower portion of the inner tank 4 and the first discharge line 45; a heater 48 that heats the liquefied gas flowing through the heating line 47; an on-off valve 49 at the heating line 47; an inner tank pressure gauge 95 that detects the pressure in the inner tank 4; and first controlling circuitry (inner tank controlling circuitry) 60A. The first discharge line 45 according to the present embodiment connects a top portion of the inner tank dome 42, which is a highest position in the inner tank 4, and a lower end of the first discharge tower 15.

The first controlling circuitry 60A operates the first pressure relief valve 46 and the on-off valve 49 based on the inner tank internal pressure detected by the inner tank pressure gauge 95. The first controlling circuitry 60A always monitors the inner tank internal pressure detected by the inner tank pressure gauge 95. When the inner tank internal pressure exceeds a first allowable value, the first controlling circuitry 60A performs first depressurizing control of opening the first pressure relief valve 46 and the on-off valve 49. Moreover, the first controlling circuitry 60A monitors the inner tank internal pressure during the first depressurizing control. When the inner tank internal pressure becomes a first reference value (first reference value < first allowable value) or less during the first depressurizing control, the first controlling circuitry 60A closes the first pressure relief valve 46 and the on-off valve 49 and terminates the first depressurizing control. The first allowable value is an inner tank allowable value, and the first reference value is an inner tank reference value.

When the first pressure relief valve 46 is open, the boil off gas of the liquefied gas flows from the top portion of the inner tank 4 into the first discharge line 45. When the on-off valve 49 is open, the liquefied gas flows from the lower portion of the inner tank 4 into the heating line 47. The liquefied gas having flowed into the heating line 47 is heated by the heater 48 to a temperature higher than the temperature of the boil off gas in the inner tank 4. The liquefied gas which has been heated and evaporated in the heating line 47 flows into the first discharge line 45. With this, the boil off gas becomes higher in temperature than the boil off gas at the top portion of the inner tank 4 and flows into the first discharge tower 15. The evaporated boil off gas having flowed into the first discharge tower 15 flows upward in the first discharge tower 15 and is discharged from the upper end portion of the first discharge tower 15 to the atmosphere.

As above, when the inner tank internal pressure of the inner tank 4 is excessive, the first depressurizer 10A discharges the boil off gas from the inner tank 4 through the first discharge tower 15 to the outside, and thus, the inner tank 4 is depressurized. The boil off gas discharged through the first discharge tower 15 to the atmosphere is higher in temperature than the boil off gas in the inner tank 4, and therefore, the generation of liquid air in the vicinity of the discharge port of the first discharge tower 15 is suppressed.

### Second Depressurizer 10B

The ship 1 according to the present embodiment includes a second depressurizer 10B in addition to the first depressurizer 10A. In case of emergency in which the liquefied gas leaks to the inter-tank region 30 between the inner tank 4 and the outer tank 5 of the double-shell tank 3, and therefore, pressure (hereinafter referred to as an "inter-tank internal pressure") of the inter-tank region 30 exceeds preset second allowable pressure, the second depressurizer 10B discharges the liquefied gas, which has leaked to the inter-tank region 30 and evaporated, through the second discharge tower 16 to the atmosphere. The second discharge tower 16 according to the present embodiment is independent from the first discharge tower 15. As with the first discharge tower 15, the discharge port of the second discharge tower 16 is located at a place that is isolated from the ignition source of the ship and the crews of the ship.

The second depressurizer 10B includes: a second discharge line 81 connecting the outer tank dome 52 of the outer tank 5 and the second discharge tower 16; a second pressure relief valve (inter-tank pressure relief valve) 83 at the second discharge line 81; a third discharge line 82 connecting the outer tank main body 51 of the outer tank 5 and the second discharge line 81; a third pressure relief valve 84 at the third discharge line 82; the upper vacuum gauge 91 and the upper pressure gauge 93 which detect the pressure of the upper region 31; the lower vacuum gauge 92 and the lower pressure gauge 94 which detect the pressure of the lower region 32; an inactive gas supply line 85 connecting an inactive gas source 87 and the second discharge line 81; a supply valve 86 at the inactive gas supply line 85; and second controlling circuitry (inter-tank controlling circuitry) 60B. The second discharge line 81 is completely independent from the first discharge line 45.

The second controlling circuitry 60B may be integrated with the first controlling circuitry 60A included in the first depressurizer 10A. The functionality of the controlling circuitry 60A and 60B disclosed in the present specification may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The second controlling circuitry 60B operates the second pressure relief valve 83 and the supply valve 86 based on the pressure of the upper region 31 which is detected by the upper vacuum gauge 91 and the upper pressure gauge 93. The second controlling circuitry 60B always monitors the pressure of the upper region 31 which is detected by the upper vacuum gauge 91 and the upper pressure gauge 93. When the pressure of the upper region 31 exceeds a second allowable value, the second controlling circuitry 60B performs second depressurizing control of opening the second pressure relief valve 83 and the supply valve 86. The second controlling circuitry 60B continues to monitor the pressure of the upper region 31 also during the second depressurizing control. When the pressure of the upper region 31 becomes a second reference value (second reference value < second allowable value) or less during the second depressurizing control, the second controlling circuitry 60B closes the second pressure relief valve 83 and the supply valve 86 and terminates the second depressurizing control. The second allowable value is an inter-tank allowable value, and the second reference value is an inter-tank reference value. Generally, design withstand pressure of the outer tank 5 is lower than design withstand pressure of the inner tank 4. Therefore, although the present embodiment is not especially limited, the second allowable value may be smaller than the first allowable value, and the second reference value may be smaller than the first reference value.

When the second pressure relief valve 83 is open, the evaporated liquefied gas flows from the upper region 31 into the second discharge line 81. When the supply valve 86 is open, the inactive gas flows from the inactive gas source 87 into the second discharge line 81. The inactive gas having flowed into the second discharge line 81 dilutes the evaporated liquefied gas flowing through the second discharge line 81. The diluted evaporated liquefied gas flows into the second discharge tower 16, flows upward in the second discharge tower 16, and is discharged from an upper end portion of the second discharge tower 16 to the atmosphere.

The second controlling circuitry 60B operates the third pressure relief valve 84 and the supply valve 86 based on the pressure of the lower region 32 which is detected by the lower vacuum gauge 92 and the lower pressure gauge 94. The second controlling circuitry 60B always monitors the pressure of the lower region 32 which is detected by the lower vacuum gauge 92 and the lower pressure gauge 94. When the pressure of the lower region 32 exceeds the second allowable value, the second controlling circuitry 60B performs third depressurizing control of opening the third pressure relief valve 84 and the supply valve 86. The second controlling circuitry 60B continues to monitor the pressure of the lower region 32 also during the third depressurizing control. When the pressure of the lower region 32 becomes the second reference value or less during the third depressurizing control, the second controlling circuitry 60B closes the third pressure relief valve 84 and the supply valve 86 and terminates the third depressurizing control.

When the third pressure relief valve 84 is open, the evaporated liquefied gas flows from the lower region 32 through the third discharge line 82 into the second discharge line 81. When the supply valve 86 is open, the inactive gas flows from the inactive gas source 87 into the second discharge line 81. The inactive gas having flowed into the second discharge line 81 dilutes the evaporated liquefied gas flowing through the second discharge line 81. The diluted evaporated liquefied gas flows into the second discharge tower 16, flows upward in the second discharge tower 16, and is discharged from the upper end portion of the second discharge tower 16 to the atmosphere.

As above, in the second depressurizer 10B, when the pressure of the upper region 31 and/or the pressure of the lower region 32 are/is excessive, the evaporated liquefied gas is discharged from the upper region 31 and/or the lower region 32 through the second discharge tower 16 to the outside, and with this, the upper region 31 and/or the lower region 32 are/is depressurized.

As described above, the ship 1 according to the present embodiment includes: the hull 2; at least one double-shell tank 3 mounted on the hull 2 and including the inner tank 4 and the outer tank 5, the inner tank 4 storing the liquefied gas, the outer tank 5 covering the inner tank 4; at least one first discharge tower 15 extending upward from the hull 2; at least one second discharge tower 16 extending upward from the hull 2 and independent from the first discharge tower 15; the first discharge line 45 connecting the upper portion of the inner tank 4 and an inside of the first discharge tower 15; the second discharge line 81 connecting the inter-tank region 30 between the inner tank 4 and the outer tank 5 and an inside of the second discharge tower 16 and independent from the first discharge line 45; and the pressure relief structure (in the present embodiment, the second pressure relief valve 83) that is at the second discharge line 81, is normally closed, and is open when the pressure of the inter-tank region 30 exceeds the predetermined second allowable value (inter-tank allowable value). In the ship 1 according to the present embodiment, the inter-tank region 30 is divided into regions (the upper region 31 and the lower region 32), and each of the regions and the second discharge line 81 are connected to each other.

According to the ship 1 configured as above, when the pressure of the inter-tank region 30 increases since the liquefied gas enters into and evaporates in the inter-tank region 30 between the inner tank 4 and the outer tank 5, the evaporated liquefied gas is discharged from the inter-tank region 30 through the second discharge line 81, and with this, the inter-tank region 30 is depressurized. Therefore, damages of the inner tank 4 and the outer tank 5 by excessive pressure can be prevented.

Moreover, a discharge route of the boil off gas of the liquefied gas which is discharged from the inner tank 4 and a discharge route of the evaporated liquefied gas discharged from the inter-tank region 30 are independent from each other. To be specific, the discharge route of the boil off gas of the inner tank 4 is realized by the first discharge line 45 and the first discharge tower 15, and the discharge route of the liquefied gas that has leaked to the inter-tank region 30 and evaporated is realized by the second discharge line 81 and the second discharge tower 16. Therefore, the evaporated liquefied gas and outside air can be prevented from flowing backward into the discharge route of the boil off gas of the inner tank 4 when depressurizing the inter-tank region 30.

Moreover, the ship 1 according to the present embodiment includes: the first pressure relief valve (inner tank pressure relief valve) 46 at the first discharge line 45; the inner tank pressure gauge 95 that detects the pressure in the inner tank 4; and the first controlling circuitry (inner tank controlling circuitry) 60A that controls the first pressure relief valve 46 such that when the detected pressure in the inner tank 4 exceeds the first allowable value (inner tank allowable value), the first pressure relief valve 46 is open, and after that, when the detected pressure in the inner tank 4 becomes the predetermined first reference value (inner tank reference value) lower than the first allowable value, the first pressure relief valve 46 is closed.

With this, the first depressurizer 10A for the inner tank 4 can be automatically operated. Moreover, in the ship 1 according to the present embodiment, the first depressurizer 10A for the inner tank 4 can be operated independently from the second depressurizer 10B for the inter-tank region 30. However, the first depressurizer 10A and the second depressurizer 10B may operate at the same time.

Moreover, the ship 1 according to the present embodiment includes: an inter-tank pressure gauge that detects the pressure of the inter-tank region 30; and the second controlling circuitry (inter-tank controlling circuitry) 60B that controls the second pressure relief valve 83 such that when the detected pressure of the inter-tank region 30 exceeds the second allowable value, the second pressure relief valve 83 is open, and after that, when the detected pressure of the inter-tank region 30 becomes the predetermined second reference value (inter-tank allowable value) lower than the second allowable value, the second pressure relief valve 83 is closed. **In** the above embodiment, each of the upper vacuum gauge 91, the lower vacuum gauge 92, the upper pressure gauge 93, and the lower pressure gauge 94 corresponds to the inter-tank pressure gauge.

As above, the second depressurizer 10B for the inter-tank region 30 can be automatically operated. Moreover, in the ship 1 according to the present embodiment, the second depressurizer 10B for the inter-tank region 30 can be operated independently from the first depressurizer 10A for the inner tank 4.

Furthermore, the ship 1 according to the present embodiment includes the inactive gas supply line 85 that supplies the inactive gas to the second discharge line 81.

With this, since the evaporated liquefied gas discharged through the second discharge tower 16 to the atmosphere is diluted by the inactive gas, the evaporated liquefied gas can be discharged more safely.

The foregoing has described the preferred embodiment of the present disclosure. Modifications of specific structures and/or functional details of the above embodiment may be included in the present disclosure as long as they are within the scope of the present disclosure. The above configuration may be changed as below, for example.

For example, in the ship 1 according to the above embodiment, the first pressure relief valve 46 is adopted as one example of the pressure relief structure at the first discharge line 45. Moreover, the second pressure relief valve 83 is adopted as one example of the pressure relief structure at the second discharge line 81. Furthermore, the third pressure relief valve 84 is adopted as one example of the pressure relief structure at the third discharge line 82. However, these pressure relief structures are not limited to valves that operate by the control of the controlling circuitry 60A and 60B. For example, a spring safety valve or a rupture disk may be adopted as the pressure relief structure.

Moreover, in the ship 1 according to the above embodiment, the inter-tank region 30 is divided into the spaces (the upper region 31 and the lower region 32). However, the partition 33 may be omitted, and the inter-tank region 30 may be a single continuous space.

### Reference Signs List

1 ship
2 hull
3 double-shell tank
4 inner tank
5 outer tank
10A first depressurizer
10B second depressurizer
15 first discharge tower
16 second discharge tower
45 first discharge line
46 first pressure relief valve (inner tank pressure relief valve)
60A first controlling circuitry (inner tank controlling circuitry)
60B second controlling circuitry (inter-tank controlling circuitry)
81 second discharge line
82 third discharge line
83 second pressure relief valve (inter-tank pressure relief valve as one example of pressure relief structure)
84 third pressure relief valve (inter-tank pressure relief valve as one example of pressure relief structure)
85 inactive gas supply line
86 supply valve
87 inactive gas source
91 upper vacuum gauge (inter-tank pressure gauge)
92 lower vacuum gauge (inter-tank pressure gauge)
93 upper pressure gauge (inter-tank pressure gauge)
94 lower pressure gauge (inter-tank pressure gauge)
95 inner tank pressure gauge

## Claims

1. A ship (1) comprising:
a hull (2);
at least one double-shell tank (3) mounted on the hull (2) and including an inner tank (4) and an outer tank (5), the inner tank (4) storing a liquefied gas, the outer tank (5) covering the inner tank (4);
at least one first discharge tower (15) extending upward from the hull (2);
a first discharge line (45) connecting an upper portion of the inner tank (4) and an inside of the first discharge tower (15),
wherein the ship (1) is **characterized by**:
at least one second discharge tower (16) extending upward from the hull (2) and independent from the first discharge tower (15);
a second discharge line (81) connecting an inter-tank region between the inner tank (4) and the outer tank (5) and an inside of the second discharge tower (16); and
a pressure relief structure (83, 84) that is at the second discharge line (81), is normally closed, and is open when pressure of the inter-tank region exceeds a predetermined inter-tank allowable value.

2. The ship according to claim 1, wherein the pressure relief structure (83, 84) is an inter-tank pressure relief valve (83, 84),
the ship (1) further comprising:
an inter-tank pressure gauge (91, 92, 93, 94) that detects the pressure of the inter-tank region; and
inter-tank controlling circuitry (60B) that controls the inter-tank pressure relief valve (83, 84) such that when the detected pressure of the inter-tank region exceeds the inter-tank allowable value, the inter-tank pressure relief valve (83, 84) is open, and after that, when the detected pressure of the inter-tank region becomes a predetermined inter-tank reference value lower than the inter-tank allowable value, the inter-tank pressure relief valve (83, 84) is closed.

3. The ship according to claim 1 or 2, further comprising an inactive gas supply line (85) through which an inactive gas is supplied to the second discharge line (81).

4. The ship according to any one of claims 1 to 3, wherein:
the inter-tank region is divided into regions; and
each of the regions and the second discharge line (81) are connected to each other.

5. The ship according to any one of claims 1 to 4, further comprising:
an inner tank pressure relief valve (46) at the first discharge line (45);
an inner tank pressure gauge (95) that detects pressure in the inner tank (4); and
inner tank controlling circuitry (60A) that controls the inner tank pressure relief valve (46) such that when the detected pressure in the inner tank (4) exceeds a predetermined inner tank allowable value, the inner tank pressure relief valve (46) is open, and after that, when the detected pressure in the inner tank (4) becomes a predetermined inner tank reference value lower than the inner tank allowable value, the inner tank pressure relief valve (46) is closed.

## Patentansprüche

1. Schiff (1), umfassend:
einen Rumpf (2);
mindestens einen Doppelwandtank (3), der an dem Rumpf (2) montiert ist und einen Innentank (4) und einen Außentank (5) einschließt, wobei der Innentank (4) ein verflüssigtes Gas speichert, wobei der Außentank (5) den Innentank (4) abdeckt;
mindestens einen ersten Entladeturm (15), der sich von dem Rumpf (2) nach oben erstreckt;
eine erste Entladeleitung (45), die einen oberen Abschnitt des Innentanks (4) und ein Inneres des ersten Entladeturms (15) verbindet,
wobei das Schiff (1) **gekennzeichnet ist durch:**
mindestens einen zweiten Entladeturm (16), der sich von dem Rumpf (2) nach oben erstreckt und von dem ersten Entladeturm (15) unabhängig ist;
eine zweite Entladeleitung (81), die einen Zwischentankbereich zwischen dem Innentank (4) und dem Außentank (5) und ein Inneres des zweiten Entladeturms (16) verbindet; und
wobei eine Druckentlastungsstruktur (83, 84), die an der zweiten Entladeleitung (81) ist, normalerweise geschlossen ist und geöffnet ist, wenn der Druck des Zwischentankbereichs einen vorbestimmten zulässigen Zwischentankwert überschreitet.

2. Schiff nach Anspruch 1, wobei die Druckentlastungsstruktur (83, 84) ein Zwischentankdruckentlastungsventil (83, 84) ist,
das Schiff (1), ferner umfassend:
einen Zwischentankdruckmesser (91, 92, 93, 94), der den Druck des Zwischentankbereichs erfasst; und
eine Zwischentanksteuerschaltung (60B), die das Zwischentankdruckentlastungsventil (83, 84) derart steuert, dass, wenn der erfasste Druck des Zwischentankbereichs den zulässigen Zwischentankwert überschreitet, das Zwischentankdruckentlastungsventil (83, 84) geöffnet wird, und danach, wenn der erfasste Druck des Zwischentankbereichs ein vorbestimmter Zwischentankreferenzwert wird, der niedriger als der zulässige Zwischentankwert ist, das Zwischentankdruckentlastungsventil (83, 84) geschlossen wird.

3. Schiff nach Anspruch 1 oder 2, ferner umfassend eine Zufuhrleitung (85) eines inaktiven Gases, durch die ein inaktives Gas zu der zweiten Entladeleitung (81) zugeführt wird.

4. Schiff nach einem der Ansprüche 1 bis 3, wobei:
der Zwischentankbereich in Bereiche unterteilt ist; und
jeder der Bereiche und die zweite Entladeleitung (81) miteinander verbunden sind.

5. Verfahren nach einem der Ansprüche 1 bis 4, ferner umfassend:
ein Innentankdruckentlastungsventil (46) an der ersten Entladeleitung (45);
einen Innentankdruckmesser (95), der Druck in dem Innentank (4) erfasst;
und
eine Innentanksteuerschaltung (60A), die das Innentankdruckentlastungsventil (46) derart steuert, dass, wenn der erfasste Druck in dem Innentank (4) einen vorbestimmten zulässigen Innentankwert überschreitet, das Innentankdruckentlastungsventil (46) geöffnet wird, und danach, wenn der erfasste Druck in dem Innentank (4) ein vorbestimmter Innentankreferenzwert wird, der niedriger als der zulässige Innentankwert ist, das Innentankdruckentlastungsventil (46) geschlossen wird.

## Revendications

1. Navire (1) comprenant :
une coque (2) ;
au moins une cuve à double coque (3) montée sur la coque (2) et comportant une cuve interne (4) et une cuve externe (5), la cuve interne (4) stockant un gaz liquéfié, la cuve externe (5) recouvrant la cuve interne (4) ;
au moins une première tour de refoulement (15) s'étendant vers le haut à partir de la coque (2) ;
une première conduite de refoulement (45) reliant une partie supérieure de la cuve interne (4) et un intérieur de la première tour de refoulement (15),
dans lequel le navire (1) est **caractérisé par** :
au moins une seconde tour de refoulement (16) s'étendant vers le haut à partir de la coque (2) et indépendante de la première tour de refoulement (15) ;
une seconde conduite de refoulement (81) reliant une région inter-cuve entre la cuve interne (4) et la cuve externe (5) et un intérieur de la seconde tour de refoulement (16) ; et
une structure de décompression (83, 84) qui se trouve au niveau de la seconde conduite de refoulement (81), est normalement fermée, et est ouverte lorsque la pression de la région inter-cuve dépasse une valeur admissible inter-cuve prédéterminée.

2. Navire selon la revendication 1, dans lequel la structure de décompression (83, 84) est une soupape de décompression inter-cuve (83, 84),
le navire (1) comprenant en outre :
un manomètre inter-cuve (91, 92, 93, 94) qui détecte la pression de la région inter-cuve ; et
un ensemble de circuits de commande inter-cuve (60B) qui commande la soupape de décompression inter-cuve (83, 84) de telle sorte que lorsque la pression détectée de la région inter-cuve dépasse la valeur admissible inter-cuve, la soupape de décompression inter-cuve (83, 84) est ouverte, et après cela, lorsque la pression détectée de la région inter-cuve devient une valeur de référence inter-cuve prédéterminée inférieure à la valeur admissible inter-cuve, la soupape de décompression inter-cuve (83, 84) est fermée.

3. Navire selon la revendication 1 ou 2, comprenant en outre une conduite d'alimentation en gaz inactif (85) par laquelle un gaz inactif est fourni à la seconde conduite de refoulement (81).

4. Navire selon l'une quelconque des revendications 1 à 3, dans lequel :
la région inter-cuve est divisée en régions ; et
chacune des régions et la seconde conduite de refoulement (81) sont reliées l'une à l'autre.

5. Navire selon l'une quelconque des revendications 1 à 4, comprenant en outre :
une soupape de décompression de cuve interne (46) au niveau de la première conduite de refoulement (45) ;
un manomètre de cuve interne (95) qui détecte une pression dans la cuve interne (4) ; et
un circuit de commande de cuve interne (60A) qui commande la soupape de décompression de cuve interne (46) de telle sorte que lorsque la pression détectée dans la cuve interne (4) dépasse une valeur admissible de cuve interne prédéterminée, la soupape de décompression de cuve interne (46) est ouverte, et après cela, lorsque la pression détectée dans la cuve interne (4) devient une valeur de référence de cuve interne prédéterminée inférieure à la valeur admissible de cuve interne, la soupape de décompression de cuve interne (46) est fermée.
